# EUROPÄISCHE PATENTANMELDUNG

(11) **EP 3 319 064 A1**
(43) Veröffentlichungstag der Anmeldung: **09.05.2018**
(21) Anmeldenummer: 17197621.0
(22) Anmeldetag: 20.10.2017
(51) Int. Cl.: G08G 1/123, G08G 1/005

(54) **VERFAHREN UND GERÄTESYSTEM ZUM AUFFINDEN EINES ABGESTELLTEN FAHRZEUGS**

(30) Priorität: 04.11.2016 DE 102016121041
(71) Anmelder: BURY Sp. z o.o., 39-300 Mielec (PL)
(72) Erfinder: Lemke, Jens, 32791 Lage (DE)
(74) Vertreter: Lins, Martina

(57) **Zusammenfassung**

Zum Auffinden eines abgestellten Fahrzeugs (1) mit Hilfe eines separaten, vom Fahrzeug (1) unabhängigen Navigationsgeräts (4) ist erfindungsgemäß vorgesehen, dass zwischen einem fest im Fahrzeug (1) befindlichen Fahrzeuggerät (2) und einem tragbaren Speichergerät (3) eine Nahdistanz-Kommunikationsverbindung hergestellt und aufrechterhalten wird, solange sich das Speichergerät (3) in der Nahdistanz befindet, dass das Speichergerät (3) zur Herstellung einer Kommunikationsverbindung mit dem als ein separates Gerät ausgebildeten Navigationsgerät (4), das eine Navigationssoftware und geeignete elektronische Navigationskarten enthält, eingerichtet wird und dass das Abreißen der Nahdistanz-Kommunikationsverbindung zwischen dem Speichergerät (3) und dem Fahrzeuggerät (2) als Kriterium für das von dem Speichergerät (3) veranlasste Abspeichern der momentanen Positionsdaten verwendet wird, die von dem Navigationsgerät (4) zur Navigation zu dem abgestellten Fahrzeug (1) verwendet werden.

## Beschreibung

Die Erfindung betrifft ein Verfahren zum Auffinden eines abgestellten Fahrzeugs mit Hilfe eines separaten, vom Fahrzeug unabhängigen Navigationsgeräts.

Die Erfindung betrifft ferner ein Gerätesystem zum Auffinden eines abgestellten Fahrzeugs zur Durchführung des Verfahrens.

In zahlreichen Fällen des Alltagslebens besteht das Problem ein abgestelltes Fahrzeug aufzufinden. Dies gilt beispielsweise, wenn ein Fahrer nicht an seinem Zielpunkt, sondern in weiterer Umgebung in einem ihm fremden Stadtviertel einen Parkplatz findet und das Fahrzeug nach einer gewissen Zeit wieder benutzen möchte. In diesem Fall kann es sehr lange dauern, bis das Fahrzeug wieder aufgefunden ist und manchmal benötigt der Fahrer hierzu fremde Hilfe. Für diesen Fall ist eine App für ein Smartphone bekannt, das mit einer Navigationssoftware als Navigationsgerät ausgebildet ist. Wenn bei eingeschalteter App beim Verlassen des Fahrzeugs eine geeignete Taste gedrückt wird, speichert das Smartphone die von der Navigationssoftware mit Hilfe einer elektronischen Navigationskarte ermittelte Position ab und ermöglicht so die Anzeige eines Wegs zum Fahrzeug von der jeweiligen aktuellen Position aus. Wenn der Fahrer jedoch die Initialisierung des Abspeichervorgangs beim Verlassen des Fahrzeugs vergisst, ist das Auffinden des Fahrzeugs mit Hilfe des Smartphones nicht mehr möglich.

Eine weitaus wichtigere Notwendigkeit zum Auffinden eines abgestellten Fahrzeugs besteht dann, wenn das Fahrzeug von jemanden aufgefunden werden soll, der dieses Fahrzeug nicht selbst abgestellt hat. Dieser Fall tritt sowohl bei Privatfahrzeugen auf großen Parkplätzen von Reparaturwerkstätten, Autoverleihunternehmen, Car-Sharing-Fahrzeugen o. ä. als auch bei professionell genutzten Fahrzeugen, wie Baufahrzeugen auf einem großen Bauhof oder an großen Baustellen, Bussen eines großen Busunternehmens, Lastkraftwagen einer großen Spedition usw. auf. Sofern fest vorgegebene Abstellplätze eingerichtet sind, werden diese mit einer entsprechenden Nummer oder Adresse versehen und so dem neuen Fahrer kommuniziert. Dieses System ist umständlich und versagt, wenn keine festen Abstellplätze vorgegeben sind, wie dies beispielsweise bei Car-Sharing-Fahrzeugen der Fall sein kann.

Durch EP 2 088 569 A1 ist es bekannt, parkhausrelevante Informationen von einer einem Parkplatz oder einer Parkplatzgruppe in einem Parkhaus zugeordneten Infrastruktur Daten auf ein geeignetes tragbares Gerät mittels einer Nahfeldkommunikation zu übertragen. Hierzu muss das Parkhaus mit einer aufwändigen Infrastruktur ausgestattet werden, die im Maximalfall ein ortsfest verbautes Gerät pro Parkplatz benötigt.

Durch US 2014/0232569 A1 und US 2014/0232570 A1 ist es bekannt, Daten von einem Fahrzeuggerät per Nahfeldkommunikation auf ein Mobilgerät zu übertragen. Das Fahrzeuggerät soll aus verschiedensten Parametern den Zustand des Fahrzeugs ermitteln, beispielsweise ob ein Fahrzustand, ein Parkzustand oder ein undefinierter Zustand vorliegt. Wird ein Parkzustand ermittelt, können die Ortsdaten für den Parkzustand übermittelt werden. Ggf. kann dabei auch eine Karte zur Anzeige des ermittelten Ortes für das Auto im Parkzustand übertragen werden. Die Ermittlung des geparkten Zustands durch das Fahrzeuggerät ist dabei aufwändig und fehleranfällig.

Der vorliegenden Erfindung liegt daher die Aufgabe zugrunde, das Auffinden eines abgestellten Fahrzeugs in einfacher Weise ohne die Möglichkeit des Vergessens eines Bedienvorgangs und ohne großen zusätzlichen Geräteaufwand zu ermöglichen.

Zur Lösung dieser Aufgabe ist erfindungsgemäß bei einem Verfahren der eingangs erwähnten Art vorgesehen, dass zwischen einem im Fahrzeug befindlichen Fahrzeuggerät und einem tragbaren Speichergerät eine Nahdistanz-Kommunikationsverbindung hergestellt und aufrecht erhalten wird, solange sich das Speichergerät in der Nahdistanz befindet, dass das Speichergerät zur Herstellung einer Kommunikationsverbindung mit dem als separates Gerät ausgebildeten Navigationsgerät, das eine Navigationssoftware und geeignete elektronische Navigationskarten enthält, eingerichtet wird und dass das Abreißen der Nahdistanz-Verbindung zwischen dem Speichergerät und dem Fahrzeuggerät als Kriterium für das von dem Speichergerät veranlasste Abspeichern der momentanen Positionsdaten verwendet wird, die von dem Navigationsgerät zur Navigation zu dem abgestellten Fahrzeug verwendet werden.

Das erfindungsgemäße Verfahren setzt somit ein Fahrzeuggerät voraus, das im Fahrzeug verbleibt und insbesondere fest im Fahrzeug verbaut sein kann. Das Fahrzeuggerät muss in der Lage sein, eine drahtlose Nahdistanz-Kommunikationsverbindung zu dem tragbaren Speichergerät herzustellen und aufrecht zu erhalten. Demzufolge muss das Speichergerät in gleicher Weise geeignet sein, die Kommunikationsverbindung mit dem Fahrzeuggerät herzustellen und beizubehalten. Das tragbare Speichergerät ist dafür vorgesehen, am Körper des Fahrers getragen zu werden, wenn dieser das abgestellte Fahrzeug verlässt. Durch die Vergrößerung des Abstandes zwischen dem Fahrzeuggerät und dem tragbaren Speichergerät wird die durch die Kommunikationsverbindung überbrückbare Nahdistanz verlassen, sodass die Verbindung abreißt. Dieses Abreißen der Verbindung wird von dem Speichergerät erkannt und in einer von unten näher dargestellten Möglichkeiten zur Abspeicherung der momentanen Positionsdaten verwendet. Diese abgespeicherten Positionsdaten werden dann dazu verwendet, mit dem Navigationsgerät den Weg zum abgestellten Fahrzeug von dem aktuellen Standort anzuzeigen.

Das erfindungsgemäße Verfahren erlaubt zahlreiche Ausführungsvarianten. Eine in vieler Hinsicht vorteilhafte Ausführungsform besteht darin, dass das Fahrzeuggerät kontinuierlich Positionsdaten generiert oder mit einem entsprechenden Gerät im Fahrzeug verbunden ist. Das Fahrzeuggerät kann somit beispielsweise ein im Fahrzeug eingebautes Navigationsgerät sein, das einen Positionsdatensensor (beispielsweise GPS-, GLONASS- oder Galileo-Sensor) enthält. Alternativ hierzu kann das Fahrzeuggerät mit einem Mobilfunkgerät verbunden sein, das mit einem Positionsdatensensor verbunden ist, um beispielsweise automatische Notrufe im Falle eines Unfalls absetzen zu können. Das Fahrzeuggerät kann die momentanen Positionsdaten ständig auf das Speichergerät übertragen, solange die Nahdistanz-Kommunikationsverbindung besteht. Das Speichergerät kann in diesem Fall so eingestellt sein, dass beim Abreißen der Nahdistanz-Kommunikationsverbindung zwischen dem Fahrzeuggerät und dem Speichergerät Positionsdaten als Positionsdaten des Fahrzeugs in einem Datenspeicher abgespeichert werden, die vor dem Abreißen der Nahdistanz-Verbindung übermittelt worden sind. Dies können die letzten vollständigen Positionsdaten oder auch in einem vorbestimmten Zeitraum vorher übermittelte Positionsdaten sein. Im letzteren Fall kann der Tatsache Rechnung getragen werden, dass das Abreißen der Nahdistanz-Verbindung erst in einer gewissen Entfernung zum Fahrzeug zu erwarten ist.

In einer alternativen Ausführungsform kann das Speichergerät selbst mit einem Positionsdatensensor verbunden sein, da derartige Positionsdatensensoren, beispielsweise als GPS-Chips, preiswert erhältlich sind. Beim Abreißen der Nahdistanz-Kommunikationsverbindung werden die momentanen Positionsdaten im Datenspeicher des Speichergeräts abgespeichert.

In einer noch anderen Ausführungsform kann das Speichergerät das Abreißen der Kommunikationsverbindung erkennen und sich in einer Kommunikationsverbindung mit einem Navigationsgerät befinden. In diesem Fall reicht es aus, wenn das Speichergerät ein Initialisierungssignal auf das Navigationsgerät übermittelt, sodass dieses im Navigationsgerät ermittelte Positionsdaten als Fahrzeugpositionsdaten abspeichert. Für einige Anwendungszwecke ist es bei dieser Lösung nachteilig, dass sich die Positionsdaten des abgestellten Fahrzeugs nur in dem Navigationsgerät, beispielsweise in Form eines Smartphones, befinden, mit dem das Speichergerät beim Abreißen der Nahdistanz-Kommunikationsverbindung zwischen Fahrzeuggerät und Speichergerät in einer Kommunikationsverbindung gestanden hat. Eine Abhilfe kann in diesem Fall darin bestehen, dass das Navigationsgerät die aufgrund des Initialisierungssignals ermittelte Fahrzeugposition seinerseits auf das Speichergerät über die Kommunikationsverbindung übermittelt und dort die Positionsdaten abgespeichert werden.

In einer besonders bevorzugten Ausführungsform der Erfindung ist das Speichergerät Teil des Fahrzeugschlüssels oder Teil eines Schlüsselanhängers des Fahrzeugschlüssels. Dadurch wird es ermöglicht, dass mit der Übergabe des Fahrzeugschlüssels an den Fahrer auch die Positionsdaten des Fahrzeugs übergeben werden. Grundsätzlich könnte das Speichergerät auch integraler Bestandteil eines tragbaren Navigationsgeräts sein, das beispielsweise bei Mietfahrzeugen ohne ein eingebautes Navigationsgerät zur Navigation im Straßenverkehr verwendet wird und zugleich zur Navigation zum abgestellten Fahrzeug genutzt werden kann. Eine allgemeinere Anwendungsbreite ergibt sich jedoch, wenn das Speichergerät als separates Gerät zu dem Navigationsgerät ausgebildet ist und dadurch preiswert und einfach erstellt werden kann.

Die Nahdistanz-Kommunikationsverbindung zwischen dem Fahrzeuggerät und dem Speichergerät ist beispielsweise eine Funkverbindung nach dem Bluetooth-Standard, bevorzugt nach BTLE (Bluetooth Low Energy). In gleicher Weise kann die Kommunikationsverbindung zwischen dem Speichergerät und dem Navigationsgerät hergestellt werden. Allerdings ist es bei der letztgenannten Verbindung auch möglich, diese mit einem Kommunikationskabel, beispielsweise nach einem USB-Standard, herzustellen. Eine weitere Variante besteht gemäß den obigen Ausführungen darin, dass das Speichergerät das Abreißen der Funkverbindung zum Fahrzeuggerät detektiert und im Übrigen integraler Bestandteil eines tragbaren Navigationsgeräts ist.

Das Fahrzeuggerät kann im Fahrzeug fest verbaut sein, auf eine Stromversorgung (Zigarettenanzünderstecker) aufgesteckt werden oder im einfachsten Fall mit einer kleinen Batterie (Knopfzelle) mit Energie versorgt werden, letzteres insbesondere, wenn lediglich die Nahdistanz-Kommunikationsverbindung zum Speichergerät hergestellt und aufrechterhalten werden soll.

Die beschriebene Erfindung ermöglicht somit ein automatisches Abspeichern von Positionsdaten eines abgestellten Fahrzeugs, wenn die Nahdistanz-Kommunikationsverbindung zu einem im Fahrzeug befindlichen Fahrzeuggerät abreißt. Die Abspeicherung der Positionsdaten des abgestellten Fahrzeugs erfolgt daher automatisch und kann bei Bedarf mit einem Navigationsgerät zur Kenntlichmachung eines Wegs zum abgestellten Fahrzeug von der aktuellen Position aus verwendet werden.

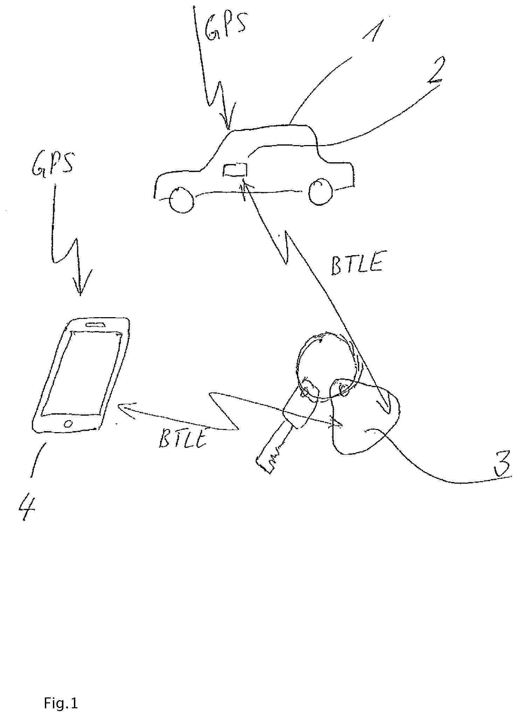

Eins der beschriebenen Ausführungsbeispiele ist in der beigefügten Zeichnung schematisch dargestellt.

In einem Fahrzeug 1 befindet sich ein Fahrzeuggerät 2, das in der Lage ist, Navigationsdaten, hier in Form von GPS-Daten, zu empfangen und daraus Positionsdaten zu generieren. Das Fahrzeuggerät 2 steht in einer drahtlosen Nahdistanzverbindung BTLE mit einem Speichergerät 3, das in dem dargestellten Ausführungsbeispiel in Form eines Schlüsselanhängers ausgebildet ist. Das Speichergerät 3 kann wiederum in einer Nahbereichsverbindung BTLE mit einem Navigationsgerät 4 stehen, das in dem dargestellten Ausführungsbeispiel als Smartphone ausgebildet ist und in der Lage ist, eine Navigation mit Hilfe von empfangenen Navigationsdaten GPS durchzuführen.

Solange sich der Benutzer im Fahrzeug 1 befindet, besteht eine Nahdistanzverbindung zwischen dem Fahrzeuggerät 2 und dem Speichergerät 3. Mit dieser Verbindung werden vom Fahrzeuggerät generierte Positionsdaten laufend auf das Speichergerät 3 übertragen.

Verlässt der Benutzer das Fahrzeug reißt die Nahdistanzverbindung BTLE zwischen dem Fahrzeuggerät 2 und dem Speichergerät 3 ab. In dem Speichergerät 3 wird die letzte übertragene Position abgespeichert.

Soll das Fahrzeug aufgesucht werden, beispielsweise durch einen anderen Benutzer, kann dieser mit dem Speichergerät 3 eine Nahbereichsverbindung BTLE mit dem separaten tragbaren Navigationsgerät 4 herstellen und die in dem Speichergerät 3 abgespeicherten Positionsdaten auf das Navigationsgerät 4 übertragen. Dieses ist dann aufgrund seiner Navigationsausstattung in der Lage, von dem aktuellen Standort den Weg zu dem Ort der abgespeicherten Positionsdaten zu berechnen und anzuzeigen.

Bei der Verwendung eines in einem Schlüssel integrierten Speichergeräts 3 ergibt sich für Fahrzeuge 1, die mit einem schlüssellosen Zugangssystem ausgerüstet sind, dass die hierfür benötigte Nahdistanzverbindung BTLE zwischen dem Fahrzeug 1 und dem Speichergerät 3 auch für die erfindungsgemäßen Zwecke benutzt werden kann. Die Nahdistanzverbindung BTLE reißt in diesen Systemen bereits in einer Entfernung von wenigen Schritten zum Fahrzeug 1 ab, sodass eine Abspeicherung von Positionsdaten erfolgt, die sich aus einer unmittelbaren Nähe des Standorts des Fahrzeugs 1 ergeben.

Obwohl anhand der Zeichnung ein spezielles Ausführungsbeispiel erläutert worden ist, soll die Erfindung hierauf nicht beschränkt sein. Die oben erwähnten anderen Ausführungsformen und Varianten können vom Fachmann im Rahmen der Erfindung ohne weiteres realisiert werden.

## Patentansprüche

1. Verfahren zum Auffinden eines abgestellten Fahrzeugs (1) mit Hilfe eines separaten, vom Fahrzeug (1) unabhängigen Navigationsgeräts (4), **dadurch gekennzeichnet, dass** zwischen einem fest im Fahrzeug (1) befindlichen Fahrzeuggerät (2) und einem tragbaren Speichergerät (3) eine Nahdistanz-Kommunikationsverbindung hergestellt und aufrechterhalten wird, solange sich das Speichergerät (3) in der Nahdistanz befindet,
dass das Speichergerät (3) zur Herstellung einer Kommunikationsverbindung mit dem als ein separates Gerät ausgebildeten Navigationsgerät (4), das eine Navigationssoftware und geeignete elektronische Navigationskarten enthält, eingerichtet wird
und dass das Abreißen der Nahdistanz-Kommunikationsverbindung zwischen dem Speichergerät (3) und dem Fahrzeuggerät (2) als Kriterium für das von dem Speichergerät (3) veranlasste Abspeichern der momentanen Positionsdaten verwendet wird, die von dem Navigationsgerät (4) zur Navigation zu dem abgestellten Fahrzeug (1) verwendet werden.

2. Verfahren nach Anspruch 1, **dadurch gekennzeichnet, dass** das Abspeichern der momentanen Positionsdaten in dem Speichergerät (3) erfolgt und über eine Kommunikationsverbindung von dem Navigationsgerät (4) ausgelesen wird.

3. Verfahren nach Anspruch 1 oder 2, **dadurch gekennzeichnet, dass** die momentanen Positionsdaten aus dem hierfür eingerichteten Fahrzeuggerät (2) entnommen werden.

4. Verfahren nach Anspruch 3, **dadurch gekennzeichnet, dass** während des Bestehens der Nahdistanz-Kommunikationsverbindung vom Fahrzeuggerät (2) kontinuierlich Positionsdaten übermittelt werden und dass beim Abreißen der Nahdistanz-Kommunikationsverbindung zwischen dem Fahrzeuggerät (2) und dem Speichergerät (3) von dem Speichergerät (3) Positionsdaten als Fahrzeugpositionsdaten abgespeichert werden, die vor dem Abreißen der Nahdistanz-Kommunikationsverbindung übermittelt worden sind.

5. Verfahren nach einem der Ansprüche 1 bis 4, **dadurch gekennzeichnet, dass** beim Abreißen der Nahdistanz-Kommunikationsverbindung zwischen dem Fahrzeuggerät (2) und dem Speichergerät (3) von dem Speichergerät (3) auf das Navigationsgerät (4) ein Initialisierungssignal zur Abspeicherung der momentanen Positionsdaten als Positionsdaten des abgestellten Fahrzeugs (1) übertragen wird.

6. Verfahren nach Anspruch 5, **dadurch gekennzeichnet, dass** die Abspeicherung der momentanen Positionsdaten zumindest auch im Speichergerät (3) vorgenommen wird.

7. Verfahren nach einem der Ansprüche 1 bis 6, **dadurch gekennzeichnet, dass** zwischen dem Speichergerät (3) und dem Navigationsgerät (4) eine drahtlose Kommunikationsverbindung hergestellt wird.

8. Gerätesystem zum Auffinden eines abgestellten Fahrzeugs (1) nach dem Verfahren nach einem der Ansprüche 1 bis 7, mit einem im Fahrzeug (1) befindlichen Fahrzeuggerät (2), einem über eine drahtlose Nahdistanz-Verbindung mit dem Fahrzeuggerät (2) kommunizierenden Speichergerät (3) und einem mit dem Speichergerät (3) in Kommunikationsverbindung bringbaren, als separates Gerät ausgebildeten Navigationsgerät (4), das eine Navigationssoftware und geeignete elektronische Navigationsdaten enthält, **wobei** das Speichergerät (3) eine Detektionseinrichtung zum Erkennen des Abreißens der Nahdistanz-Verbindung mit dem Fahrzeuggerät (2) und zum Auslösen eines Abspeicherungsvorgangs für momentane Positionsdaten aufweist.

9. Gerätesystem nach Anspruch 8, **dadurch gekennzeichnet, dass** das Speichergerät (3) einen Datenspeicher für die momentanen Positionsdaten aufweist.

10. Gerätesystem nach Anspruch 8 oder 9, **dadurch gekennzeichnet, dass** das Fahrzeuggerät (2) zur Erfassung von Positionsdaten und Übermittlung der Positionsdaten über die Nahdistanz-Kommunikationsverbindung auf das Speichergerät (3) ausgebildet ist und dass das Speichergerät (3) vor dem Abreißen der Nahdistanz-Kommunikationsverbindung übermittelte Positionsdaten als Positionsdaten des Fahrzeugs (1) im Datenspeicher abspeichert.

11. Gerätesystem nach Anspruch 8 oder 9, **dadurch gekennzeichnet**, das beim Abreißen der Nahdistanz-Kommunikationsverbindung zwischen dem Fahrzeuggerät (2) und dem Speichergerät (3) über eine Kommunikationsverbindung mit dem Navigationsgerät (4) die aktuellen Positionsdaten mittels eines vom Speichergerät (3) erzeugten Initialisierungssignals auf das Speichergerät (3) übertragbar und dort im Datenspeicher abspeicherbar sind.

12. Gerätesystem nach einem der Ansprüche 8 bis 11, **dadurch gekennzeichnet, dass** das Navigationsgerät (4) ein Smartphone mit einer Navigationssoftware ist.

13. Gerätesystem nach einem der Ansprüche 8 bis 12, **dadurch gekennzeichnet, dass** das Speichergerät (3) in einem Autoschlüssel integriert ist.

14. Gerätesystem nach einem der Ansprüche 8 bis 13, **dadurch gekennzeichnet, dass** das Speichergerät (3) als Schlüsselanhänger für einen Autoschlüssel ausgebildet ist.
